# FASCICULE DE BREVET EUROPEEN

(11) **EP 3 712 718 B1**
(45) Date de publication et mention de la délivrance du brevet: **07.10.2026**
(21) Numéro de dépôt: 19164604.1
(22) Date de dépôt: 22.03.2019
(51) Int. Cl.: G04C 3/00, G04C 9/00, G04G 19/12, G04C 3/14

(54) **PIECE D'HORLOGERIE ELECTRONIQE A DETECTEUR DE MOUVEMENT**
ELEKTRONISCHE UHR MIT BEWEGUNGSMELDER
ELECTRONIC TIMEPIECE WITH MOVEMENT DETECTOR

(43) Date de publication de la demande: 23.09.2020
(73) Titulaire: ETA SA Manufacture Horlogère Suisse, 2540 Grenchen (CH)
(72) Inventeur: ZANESCO, Vittorio, 2016 Cortailod (CH); LAGORGETTE, Pascal, 2502 Bienne (CH)
(74) Mandataire: ICB SA

(56) Documents cités:
- FR-A1- 2 365 834
- US-A- 5 612 931
- US-A- 5 946 274
- US-B1- 6 693 851

## Description

### DOMAINE TECHNIQUE

L'invention se rapporte à une pièce d'horlogerie électronique à détecteur de mouvement. La pièce d'horlogerie est à affichage analogique de l'heure au moyen d'aiguilles entraînées par un ou plusieurs moteurs électriques et par l'intermédiaire d'un ensemble de roues d'engrenage.

### ARRIERE-PLAN TECHNOLOGIQUE

Généralement, une pièce d'horlogerie électronique, telle qu'une montre-bracelet électromécanique, fonctionne avec une batterie ou pile d'alimentation électrique. Dans le cas où l'heure est affichée de manière analogique au moyen d'aiguilles, il est cherché tout type de moyen pour réduire la consommation électrique si la montre-bracelet n'est pas utilisée, c'est-à-dire n'est plus portée au poignet d'un utilisateur.

Le brevet EP 0 194 136 B1 décrit une pièce d'horlogerie électronique pour indiquer l'heure avec plusieurs d'aiguilles entraînées respectivement par plusieurs moteurs. Il peut être envisagé d'arrêter au moins un des moteurs quand la tension d'alimentation d'une source de tension devient inférieure à une valeur prédéterminée pour limiter la quantité d'électricité consommée. L'alimentation électrique peut être fournie par une ou plusieurs batteries solaires. Lors du redémarrage avec l'entraînement de tous les moteurs, la pièce d'horlogerie est corrigée et entraînée pour indiquer l'heure actuelle en corrigeant le temps suspendu suite à l'arrêt d'un des moteurs. Rien n'est par contre décrit concernant un détecteur de mouvement d'une telle pièce d'horlogerie dans le but de réduire la consommation électrique en cas d'absence de mouvement ou d'inutilisation de la pièce d'horlogerie.

Une pièce d'horlogerie électronique, telle qu'une montre électromécanique, peut aussi être munie de détecteurs de mouvement pour la commande de différentes fonctions. Dans le brevet CH 604 359 A ou la demande de brevet FR 2 365 834 A1, il est décrit un interrupteur actionné par gravité dans une montre-bracelet selon un mouvement effectué de ladite montre. Pour ce faire, une bille conductrice peut contacter au moins deux bornes conductrices en tant qu'interrupteur pour fermer un circuit électrique lié à une alimentation électrique et commander par exemple un éclairage de l'heure à afficher. Cependant il n'est pas prévu d'arrêter le fonctionnement d'une partie de la montre quand elle est retirée du poignet pour être placée notamment en mode de repos.

La demande de brevet EP 0 857 977 A1 ou le brevet US 5,946,274 décrit un dispositif de détection pour détecter une accélération. Dans une première chambre fermée du dispositif, plusieurs broches d'électrode sont agencées parallèlement les unes aux autres et une bille conductrice est agencée pour se déplacer dans une zone entourée par les broches d'électrode. La bille conductrice est habituellement maintenue sur un côté par la force magnétique d'un aimant, mais dès qu'une accélération est appliquée au dispositif, la bille conductrice se déplace contre la force de maintien magnétique de l'aimant pour contacter deux broches d'électrode pour délivrer un signal de détection. Cependant il n'est pas prévu d'arrêter le fonctionnement d'une partie de la montre quand elle est retirée du poignet pour être placée notamment en mode de repos.

Le brevet US 6,693,851 B1 décrit une montre électronique à un ou deux moteurs électriques pour l'entraînement d'une première aiguille (heures et minutes) et d'une seconde aiguille (secondes). Il est déterminé si une tension de charge fournie par un condensateur à grande capacité est supérieure à une tension de référence prédéterminée et, si elle est supérieure, l'énergie est stockée dans le condensateur de grande capacité pour revenir du mode d'économie d'énergie au mode d'affichage. Ainsi un processus de restauration de l'heure actuelle est effectué lors de la détection de la production d'énergie. Par contre, si la tension de charge est inférieure ou égale à la tension de référence prédéterminée, une interruption d'alimentation des circuits de commande est effectuée par économie d'énergie.

Le brevet US 5,612,931 A décrit une montre électronique à affichage digital de l'heure par exemple. Il est décrit aussi un détecteur de mouvement avec au moins une bille conductrice dans un logement ayant des premier et second contacts opposés l'un de l'autre. En fonction de la position de la ou des billes conductrices dans le logement un premier signal électrique et un second signal électrique sont générés signalant que la montre est portée dans une période temporelle définie. Par contre si un seul signal électrique est détecté par le microcontrôleur, cela signifie un passage à un mode de pause.

L'objet de la présente invention est donc de surmonter les problèmes identifiés ci-dessus liés à des pièces d'horlogerie électroniques à affichage analogique de l'heure.

### RESUME DE L'INVENTION

La présente invention propose donc une pièce d'horlogerie électronique à détecteur de mouvement et à affichage analogique de l'heure, comme expliqué plus en détails plus loin.

A cet effet, la présente invention concerne une pièce d'horlogerie électronique à détecteur de mouvement et à affichage analogique de l'heure selon la revendication 1. Les modes de réalisation préférés sont définis dans les revendications dépendantes 2 à 7.

Un avantage de la pièce d'horlogerie électronique à détecteur de mouvement réside dans le fait que le détecteur de mouvement comprend un élément mobile disposé libre de mouvement dans un logement d'une structure liée au mouvement horloger. Lors de l'utilisation de la pièce d'horlogerie et en fonction de la position et du mouvement de l'élément mobile dans le logement, un premier signal électrique et un second signal électrique différent du premier signal électrique sont générés par le détecteur de mouvement. Ces deux signaux électriques sont détectés par le microcontrôleur dans une période temporelle définie pour déterminer que la pièce d'horlogerie est en utilisation. Dans le cas où un seul signal électrique est détecté par le microcontrôleur dans la période temporelle définie, la pièce d'horlogerie passe dans un mode de repos en commandant l'arrêt d'au moins un moteur électrique destiné à entraîner des aiguilles d'indication de l'heure.

Avantageusement en arrêtant le premier moteur d'entraînement de l'aiguille des secondes pendant que la montre n'est pas portée au poignet par exemple, il peut toujours y avoir un affichage de l'heure par les aiguilles des heures et des minutes notamment pour rendre possible une lecture de l'heure pendant la nuit.

Avantageusement après que la pièce d'horlogerie a été placée en mode de repos, la pièce d'horlogerie peut rapidement être réactivée avec une rapide remise à l'heure de toutes les aiguilles lors de son utilisation.

Avantageusement tous les composants permettant de réaliser la fonction d'arrêt et de réactivation sont très simples, et donc bon marché.

Avantageusement avec un tel détecteur de mouvement, cela permet de détecter un mouvement ou changement d'orientation dans toutes les directions, sans pratiquement aucune possibilité d'équilibre.

D'autres aspects de la présente invention sont définis dans les revendications dépendantes.

### BREVE DESCRIPTION DES FIGURES

Les buts, avantages et caractéristiques d'une pièce d'horlogerie électronique à détecteur de mouvement et à affichage analogique de l'heure apparaîtront mieux dans la description suivante de manière non limitative en regard des dessins sur lesquels :
- la figure 1 représente une vue schématique tridimensionnelle partiellement en éclaté illustrant les principaux composants d'une pièce d'horlogerie électronique à affichage analogique de l'heure selon l'invention,
- la figure 2 représente une vue schématique de différents blocs électroniques d'une pièce d'horlogerie électronique à affichage de l'heure par des aiguilles et à détecteur de mouvement selon l'invention,
- la figure 3 représente une première forme d'exécution selon un premier principe d'un détecteur de mouvement de la pièce d'horlogerie électronique à affichage analogique de l'heure selon l'invention,
- la figure 4 représente une seconde forme d'exécution selon un premier principe d'un détecteur de mouvement de la pièce d'horlogerie électronique à affichage analogique de l'heure selon l'invention,
- la figure 5 représente une troisième forme d'exécution selon un second principe d'un détecteur de mouvement de la pièce d'horlogerie électronique à affichage analogique de l'heure selon l'invention,
- la figure 6 représente une quatrième forme d'exécution selon un second principe d'un détecteur de mouvement de la pièce d'horlogerie électronique à affichage analogique de l'heure selon l'invention,
- la figure 7 représente une cinquième forme d'exécution selon un second principe d'un détecteur de mouvement de la pièce d'horlogerie électronique à affichage analogique de l'heure selon l'invention,
- la figure 8 représente une sixième forme d'exécution selon un second principe d'un détecteur de mouvement de la pièce d'horlogerie électronique à affichage analogique de l'heure selon l'invention, et
- la figure 9 représente une forme d'exécution plus détaillée relative à la première forme d'exécution de la figure 3 selon une vue en coupe d'un détecteur de mouvement de la pièce d'horlogerie électronique à affichage analogique de l'heure selon l'invention.

### DESCRIPTION DETAILLEE DE L'INVENTION

Dans la description suivante, tous les composants d'une pièce d'horlogerie à affichage analogique de l'heure, telle qu'une montre électromécanique, qui sont bien connus de l'homme du métier dans ce domaine technique ne sont relatés que de manière simplifiée. La pièce d'horlogerie comprend essentiellement un mouvement d'horlogerie muni de préférence de deux moteurs électriques, qui sont contrôlés par un microcontrôleur ayant un circuit de base de temps, pour l'entraînement des aiguilles d'indication de l'heure.

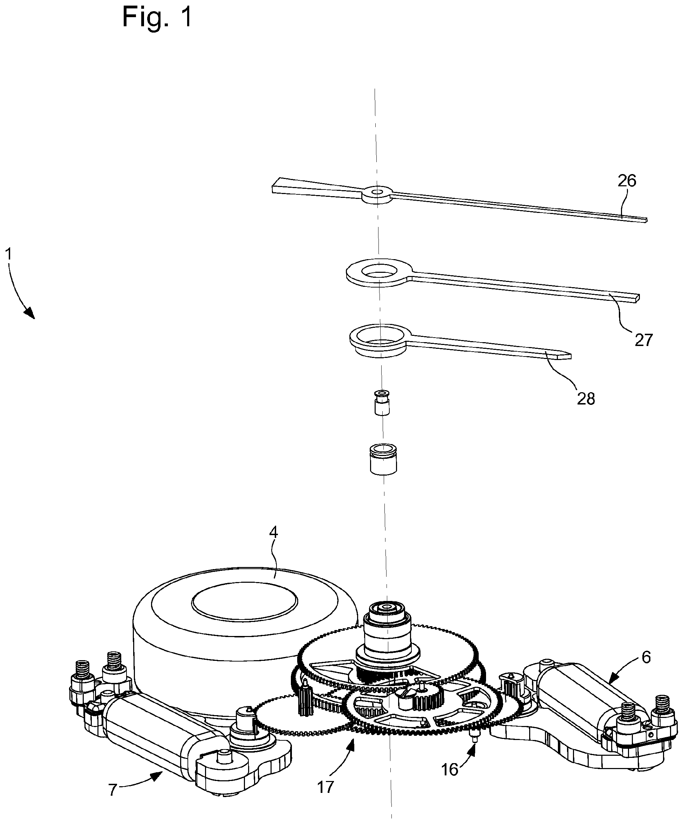

En référence à la figure 1, la pièce d'horlogerie électronique 1, telle qu'une montre électromécanique, qui est représentée schématiquement, comporte une source d'alimentation électrique 4 constituée par une pile, qui alimente un circuit électronique, tel qu'un microcontrôleur non représenté. Au moins un moteur électrique 6, 7 est prévu pour l'entraînement d'aiguilles 26, 27, 28 d'indication de l'heure par l'intermédiaire de roues d'engrenage 16, 17. Il peut être prévu au moins les aiguilles des heures 28 et des minutes 27 pour l'indication de l'heure, mais il peut être envisagé comme représenté en figure 1, d'avoir aussi une aiguille des secondes 26. Le moteur électrique 6, 7 est contrôlé par le microcontrôleur relié au moteur et alimenté par la pile ou batterie 4. Un détecteur de mouvement non représenté peut être placé à côté de la pile 4 par exemple et relié au microcontrôleur pour détecter tout mouvement lors de l'utilisation de la pièce d'horlogerie 1, qui peut être une montre-bracelet électromécanique.

Préférentiellement, la pièce d'horlogerie 1 comprend un premier moteur électrique 6 et un second moteur électrique 7 pour l'entraînement des aiguilles des heures 28, des minutes 27 et des secondes 26 par l'intermédiaire d'un ensemble de roues d'engrenages 16, 17. Le premier moteur électrique 6 entraîne uniquement l'aiguille des secondes 26 par l'intermédiaire d'un premier train de roues d'engrenages 16 bien connu, alors que le second moteur électrique 7 entraîne les aiguilles des heures 28 et des minutes 27 par l'intermédiaire d'un second train de roues d'engrenages 17 bien connu.

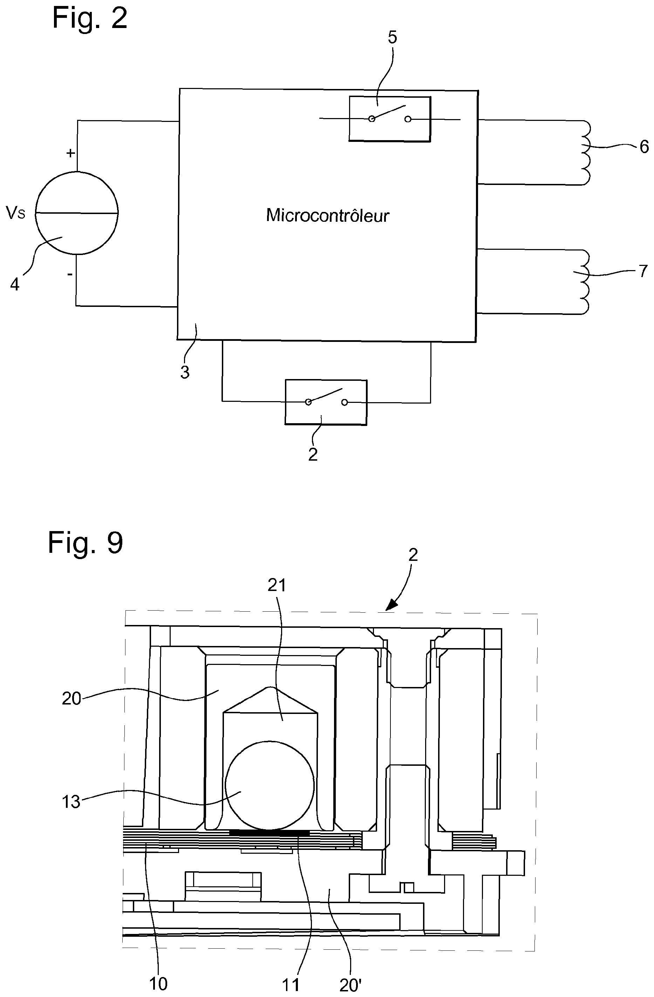

La figure 2 représente de manière schématique différents blocs électroniques de la pièce d'horlogerie électronique à affichage analogique de l'heure par des aiguilles et à détecteur de mouvement 2. Un microcontrôleur 3 est alimenté par une pile ou batterie 4, voire par une source d'alimentation, telle que des cellules solaires ou un générateur thermique ou une autre source à extraction d'énergie électrique. Le microcontrôleur 3 peut comprendre un circuit de base de temps avec un oscillateur à résonateur à quartz pour le cadencement de toutes les opérations et le calcul du temps à afficher par les aiguilles de la pièce d'horlogerie. Le microcontrôleur 3 est relié à un détecteur de mouvement 2 générant en relation avec le microcontrôleur 3 un ou plusieurs signaux électriques en fonction d'un mouvement de la pièce d'horlogerie comme expliqué ci-après. Le microcontrôleur 3 contrôle l'entraînement du ou des moteurs 6, 7. Principalement, le microcontrôleur 3 contrôle le premier moteur électrique 6 pour l'entraînement de l'aiguille des secondes, et le second moteur électrique 7 pour l'entraînement des aiguilles des heures et des minutes.

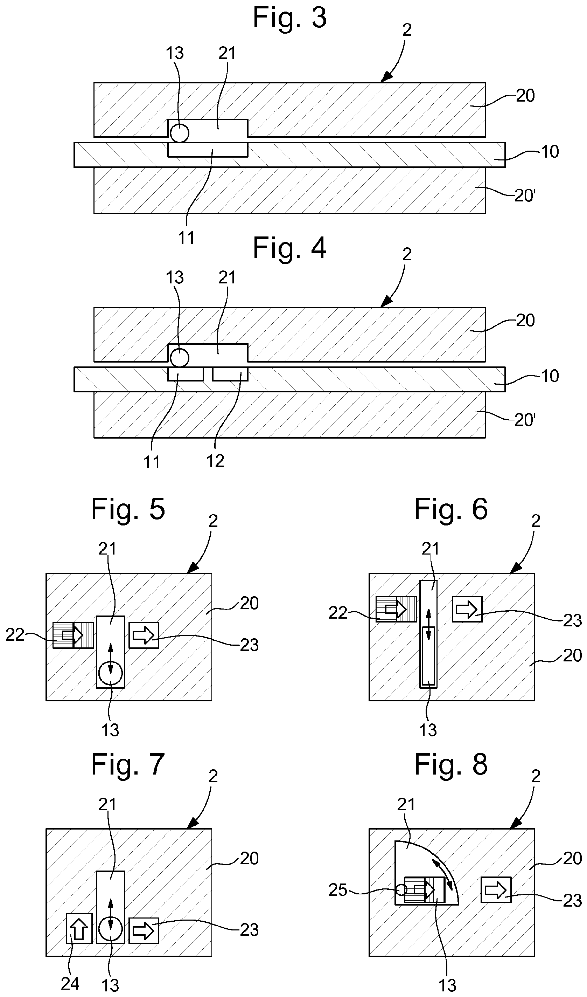

Le détecteur de mouvement 2, décrit plus en détails en référence aux figures 3 à 9 ci-après, comprend principalement un élément mobile disposé libre de mouvement dans un logement d'une structure liée au mouvement horloger. Tant que l'élément mobile est en mouvement dans son logement, un premier signal électrique et un second signal électrique différent du premier signal électrique sont générés par le détecteur de mouvement en liaison avec le microcontrôleur 3. Ainsi, le microcontrôleur 3 est susceptible de détecter les deux signaux électriques représentatifs du mouvement de la pièce d'horlogerie dans une période temporelle définie. Si un seul signal électrique est détecté par le microcontrôleur 3 dans la période temporelle définie, la pièce d'horlogerie est susceptible de passer dans un mode de repos, notamment quand la pièce d'horlogerie, telle qu'une montre-bracelet électromécanique est posée par exemple sur une table au repos pendant son inutilisation. Dans ce cas de figure, le microcontrôleur 3 peut commander l'arrêt du ou des moteurs électriques 6 et 7, ou de préférence l'arrêt du premier moteur électrique 6 comme symbolisé par un interrupteur 5 en liaison avec la connexion au premier moteur électrique 6. En arrêtant uniquement le premier moteur électrique 6, il est possible d'avoir toujours l'affichage de l'heure par les aiguilles des heures et des minutes, ce qui peut être utile pendant la nuit pour visionner l'heure par les aiguilles revêtues d'une couche phosphorescente ou fluorescente. Il peut y avoir un gain en autonomie de plus de 25% durant près de 6 heures d'inactivité journalière en arrêtant uniquement le premier moteur électrique 6 dans le mode de repos.

Il est à noter qu'après l'arrêt du ou des moteurs, pour réduire la consommation électrique dans des périodes de non utilisation de la pièce d'horlogerie, le ou les moteurs électriques 6 et 7 peuvent être immédiatement réactivés. Ceci intervient dès la nouvelle utilisation de la pièce d'horlogerie une fois la détection des deux signaux électriques du détecteur de mouvement 2 par le microcontrôleur 3. Comme le microcontrôleur 3 comprend des compteurs de temps et le placement d'une ou des aiguilles dans une position d'arrêt déterminée, la remise en fonction de la pièce d'horlogerie et la remise à l'heure pour l'affichage de l'heure par les aiguilles se fait automatiquement. Dans le cas où uniquement le premier moteur électrique 6 est arrêté, l'aiguille des secondes peut être automatiquement placée à 12h par exemple en mode de repos.

Il est à noter que la période temporelle définie de détection des deux signaux électriques peut être programmée selon les besoins des utilisateurs de la pièce d'horlogerie. Il peut être prévu de fixer cette période temporelle par exemple à 30 minutes, mais d'autres valeurs sont envisageables. Chaque signal électrique peut être aussi défini comme un état électrique, c'est-à-dire un niveau de tension.

La figure 3 représente une première forme d'exécution selon un premier principe d'un détecteur de mouvement 2 de la pièce d'horlogerie électronique à affichage analogique de l'heure. L'élément mobile 13 est une bille conductrice 13, telle qu'une bille dorée, qui est montée libre de mouvement dans le logement 21 de manière à servir de contacteur électrique notamment pour relier comme un interrupteur deux bornes de connexion d'un circuit électrique faisant partie par exemple du microcontrôleur. Le logement 21 peut être une cavité réalisée dans une structure 20, qui peut être une platine de support du mouvement horloger. La bille conductrice 13 est emprisonnée entre la cavité 21 de la platine 20 et une plaque de circuit imprimé 10, sur laquelle est réalisée une plage de connexion électrique 11. La portion de structure 20 qui comprend le logement 21 n'est pas en contact de la plaque à circuit imprimé 10. Des pistes conductrices, telles que des pistes métalliques isolées, sont réalisées sur la plaque à circuit imprimé 10 pour relier notamment ladite plage de connexion électrique 11 au microcontrôleur.

Un espace suffisant subsiste entre le fond du logement ou cavité 21 et la plage de connexion électrique 11 de manière à permettre à la bille conductrice 13 de reposer dans le fond de la cavité sans contact avec la plage de connexion électrique 11 ou de venir en contact de ladite plage de connexion électrique 11 sans contact avec le fond de la cavité. La portion métallique de la structure 20, qui comprend le logement 21 peut être connectée à une des bornes de la source d'alimentation par exemple au potentiel zéro, alors que la plage de connexion électrique 11 peut être à un potentiel défini par le microcontrôleur obtenu par exemple par un diviseur résistif ou capacitif relié à la borne positive de la source de tension d'alimentation. Ainsi selon le mouvement de la bille conductrice 13 dans le logement 21, il peut être généré deux signaux électriques pour le microcontrôleur, un premier signal électrique à un potentiel zéro si la bille conductrice touche un bord du logement 21 et la plage de connexion électrique 11, et un second signal électrique à un potentiel défini, si la bille conductrice 13 n'est que dans le fond du logement 21 sans contact avec la plage de connexion électrique 11. Tant que les deux signaux électriques sont détectés par le microcontrôleur dans la période temporelle définie le fonctionnement de la pièce d'horlogerie n'est pas modifié avec tous les moteurs en fonction.

Il est à noter que la structure comprend une portion complémentaire 20' disposée en dessous de la plaque à circuit imprimé 10 en tant que support de ladite plaque à circuit imprimé 10 et garantissant son maintien pour avoir la plage de connexion électrique 11 fermant le logement 21 de la structure 20.

Selon une variante d'exécution plus détaillée, la figure 9 représente une vue en coupe d'un détecteur de mouvement 2 de la pièce d'horlogerie électronique. Cette variante d'exécution se base sur la première forme d'exécution de la figure 3. Le détecteur de mouvement 2 comprend bien une bille conductrice 13, par exemple métallique, disposée dans un logement 21 d'une portion de la structure 20 et au-dessus d'une plaque à circuit imprimé 10 sur laquelle est réalisée la plage de connexion électrique 11. Une portion complémentaire 20' de la structure peut supporter la plaque à circuit imprimé 10 en laissant la plage de connexion électrique 11 sans contact avec les bords du logement 21 de la portion de structure 20. La bille 13 peut bouger librement dans le logement 21 de forme tubulaire entre le fond du logement 21 et la plage de connexion électrique 11. De cette manière, le microcontrôleur peut détecter les deux signaux électriques lorsque la montre-bracelet électromécanique est portée par un utilisateur.

La figure 4 représente une variante de réalisation de celle de la figure 3 selon un premier principe d'un détecteur de mouvement 2 de la pièce d'horlogerie électronique. La seule différence réside dans le fait que deux plages de connexion électrique 11, 12 sont réalisées sur la plaque à circuit imprimé 10. Le microcontrôleur va détecter des changements de potentiel sur les deux plages de connexion électrique 11, 12 donc les deux signaux électriques selon un même principe précédemment décrit en référence à la figure 3.

Les figures 5 à 8 représentent des formes d'exécution selon un second principe d'un détecteur de mouvement de la pièce d'horlogerie électronique à affichage analogique de l'heure par une détection de variation d'un champ magnétique capté par au moins un capteur magnétique pour la génération de deux signaux électriques détectés par le microcontrôleur.

La figure 5 représente une troisième forme d'exécution selon un second principe d'un détecteur de mouvement 2 de la pièce d'horlogerie électronique à affichage analogique de l'heure.

Une bille 13, formant l'élément mobile, est disposée dans un logement 21 d'une structure 20, qui peut être en deux pièces fixées l'une à l'autre mais non représenté. La bille 13 peut être réalisée en matériau ferromagnétique. La longueur du logement 21 peut être au moins deux fois le diamètre de la bille 13, alors que la largeur et la profondeur peuvent être légèrement supérieures au diamètre de la bille 13 pour la laisser libre de bouger dans le logement 21. Un aimant permanent 22 est disposé sur une partie de la longueur du logement 21 et dans la structure 20 et un capteur magnétique 23 est disposé sur une partie de la longueur du logement 21 d'un côté opposé à l'aimant permanent 22 et en regard de l'aimant permanent 22 dans la structure 20. L'aimant permanent 22 génère un champ magnétique se dirigeant vers le capteur magnétique 23. Le capteur magnétique 23 est en mesure de détecter périodiquement un changement magnétique dans son environnement proche pour fournir un premier signal électrique ou un second signal électrique au microcontrôleur en fonction de la position de la bille en mouvement dans le logement 21.

Il est utilisé un capteur magnétique 23, qui change d'état électrique à partir d'un seuil de détection déterminé. Lorsque la bille 13 est dans la zone entre l'aimant permanent 22 et le capteur magnétique 23, un changement du champ magnétique capté par le capteur magnétique s'opère. Ainsi, un premier signal électrique est généré par le capteur magnétique 23 pour le microcontrôleur au-dessous ou au-dessus du seuil de détection déterminé. Par contre, lorsque la bille est éloignée de la zone entre l'aimant permanent 22 et le capteur magnétique 23, un second signal électrique différent du premier signal électrique est généré par le capteur magnétique 23 pour le microcontrôleur.

Comme la consommation d'un tel capteur magnétique est à un niveau bas, cela permet d'effectuer de telles mesures toutes les secondes par exemple. Lors de changements d'orientation de la montre avec la bille 13 en mouvement, le champ magnétique lu par le capteur magnétique 23 va être modifié de sorte à passer au-dessus ou au-dessous du seuil de détection déterminé. Cela permet de fournir deux signaux électriques au microcontrôleur dans une période temporelle définie pour déterminer que la montre est en utilisation avec tous les moteurs en fonction.

La figure 6 représente une quatrième forme d'exécution selon un second principe d'un détecteur de mouvement 2 de la pièce d'horlogerie électronique.

L'unique différence par rapport à la troisième forme d'exécution de la figure 5 est que l'élément mobile est un disque ferromagnétique 13 disposé dans le logement 21. La longueur du logement 21 peut être au moins 1 fois et demi ou deux fois le diamètre du disque 13, alors que la largeur et la profondeur peuvent être légèrement supérieures à l'épaisseur ou au diamètre du disque 13 pour le laisser libre de bouger ou rouler dans le logement 21 à une position entre l'aimant permanent 22 et le capteur magnétique 23 et une position éloignée de l'aimant permanent 22 et du capteur magnétique 23. Deux signaux électriques peuvent être générés pour le microcontrôleur dans une période temporelle définie pour déterminer que la montre est en utilisation avec tous les moteurs en fonction.

La figure 7 représente une cinquième forme d'exécution selon un second principe d'un détecteur de mouvement 2 de la pièce d'horlogerie électronique.

Cette cinquième forme d'exécution se différencie de la troisième forme d'exécution en ce que la bille 13 est magnétisée et disposée dans le logement 21 libre de mouvement d'une structure par exemple amagnétique ou non métallique. Un premier capteur magnétique 23 est disposé sur une partie de la longueur du logement 21 et dans la structure 20 et un second capteur magnétique 24 est disposé sur une partie de la longueur du logement 21 d'un côté opposé au premier capteur magnétique 23 et en regard du premier capteur magnétique 23 dans la structure 20. Le premier capteur magnétique 23 a une orientation orthogonale au second capteur magnétique 24. Le premier capteur magnétique 23 et/ou le second capteur magnétique 24 sont en mesure de détecter périodiquement un changement magnétique dans leur environnement proche pour fournir un premier signal électrique ou un second signal électrique au microcontrôleur en fonction de la position de la bille 13 dans le logement 21. Le premier signal électrique et le second signal électrique sont générés au-dessous et au-dessus d'un seuil de détection déterminé par chaque capteur magnétique 23, 24 ou au moins par un des capteurs magnétiques pour le microcontrôleur dans une période temporelle définie pour déterminer que la montre est en utilisation avec tous les moteurs en fonction.

Finalement la figure 8 représente une sixième forme d'exécution selon un second principe d'un détecteur de mouvement 2 de la pièce d'horlogerie électronique.

L'élément mobile 13 est constitué d'un aimant permanent 13 disposé dans un logement 21 de la structure 20. L'aimant permanent est monté libre de rotation autour d'un axe 25 dans le logement 21 en forme de quart de cercle. Le capteur magnétique 23 est disposé dans la structure 20 perpendiculaire à l'axe de rotation 25 et par exemple dans le prolongement d'une portion rectiligne du logement 21. Un premier signal électrique et un second signal électrique sont générés pour le microcontrôleur au-dessous ou au-dessus d'un seuil de détection déterminé par le capteur magnétique 23 en fonction de la position proche ou éloignée de l'aimant permanent 13. Si les deux signaux électriques sont générés dans une période temporelle définie pour le microcontrôleur, il est déterminé que la montre est en utilisation avec tous les moteurs en fonction. Dans le cas contraire au moins le moteur de l'aiguille des secondes est arrêté en mode de repos comme pour les autres formes d'exécution des figures 3 à 7.

## Revendications

1. Pièce d'horlogerie électronique (1) à affichage analogique de l'heure et à détecteur de mouvement (2), la pièce d'horlogerie (1) comprenant un mouvement horloger muni d'au moins un moteur électrique (6, 7) pour l'entraînement d'une pluralité d'aiguilles (26, 27, 28) d'indication de l'heure par l'intermédiaire d'un ensemble de roues d'engrenages (16, 17), et d'un microcontrôleur (3) relié au détecteur de mouvement (2) et contrôlant l'au moins moteur (6, 7),
**caractérisée en ce que** le détecteur de mouvement (2) comprend un élément mobile (13) disposé libre de mouvement dans un logement (21) d'une structure (20) liée au mouvement horloger, et
**en ce que** selon la position et le mouvement de l'élément mobile (13) dans le logement (21), un premier signal électrique et un second signal électrique différent du premier signal électrique générés par le détecteur de mouvement, sont susceptibles d'être détectés par le microcontrôleur (3) dans une période temporelle définie pour déterminer que la pièce d'horlogerie (1) est en utilisation, alors que dans le cas où un seul signal électrique est détecté par le microcontrôleur (3) dans la période temporelle définie, la pièce d'horlogerie (1) est susceptible de passer dans un mode de repos en commandant l'arrêt de l'au moins un moteur électrique (6, 7).

2. Pièce d'horlogerie électronique (1) selon la revendication 1 dans laquelle l'élément mobile (13) est une bille conductrice (13) disposée libre de mouvement dans le logement (21) de la structure (20) en étant emprisonnée entre le logement (21) et une plaque de circuit imprimé (10), sur laquelle est réalisée une plage de connexion électrique (11) reliée au microcontrôleur (3), et dans laquelle une portion métallique de la structure (20) qui comprend le logement (21) et qui est à un potentiel zéro, n'est pas en contact de la plaque à circuit imprimé (10), et dans laquelle un espace subsiste entre un fond du logement (21) et la plage de connexion électrique (11) de manière à permettre à la bille conductrice (13) de reposer dans le fond du logement (21) sans contact avec la plage de connexion électrique (11), qui est à un potentiel défini par le microcontrôleur (3) ou de venir en contact de ladite plage de connexion électrique (11) sans contact avec le fond du logement (21) pour imposer un potentiel zéro à la plage de connexion électrique (11) de manière à définir le premier signal électrique et le second signal électrique.

3. Pièce d'horlogerie électronique (1) selon la revendication 1 dans laquelle l'élément mobile (13) est une bille (13) en matériau ferromagnétique, disposée libre de mouvement dans le logement (21), la longueur du logement (21) étant au moins deux fois le diamètre de la bille (13), alors que la largeur et la profondeur du logement (21) sont sensiblement supérieures au diamètre de la bille (13), et dans laquelle un aimant permanent (22) est disposé sur une partie de la longueur du logement (21) dans la structure (20), et dans laquelle un capteur magnétique (23) est disposé sur une partie de la longueur du logement (21) d'un côté opposé à l'aimant permanent (22) et en regard de l'aimant permanent (22) dans la structure (20), et dans laquelle le capteur magnétique (23) est en mesure de détecter périodiquement un changement magnétique dans son environnement proche pour fournir le premier signal électrique ou le second signal électrique au microcontrôleur (3) en fonction de la position de la bille (13) dans le logement (21).

4. Pièce d'horlogerie électronique (1) selon la revendication 3 dans laquelle le capteur magnétique (23) est configuré pour changer d'état électrique à partir d'un seuil de détection déterminé, dépendant de la position de la bille (13) dans le logement (21), dans laquelle le premier signal électrique est généré par le capteur magnétique (23) pour le microcontrôleur (3) au-dessous ou au-dessus d'un seuil de détection déterminé, le second signal électrique étant généré, lorsque la bille est éloignée d'une zone entre l'aimant permanent (22) et le capteur magnétique (23).

5. Pièce d'horlogerie électronique (1) selon la revendication 1 dans laquelle l'élément mobile (13) est un disque (13) en matériau ferromagnétique, disposé libre de mouvement dans le logement (21), dans laquelle la longueur du logement (21) est au moins une fois et demi le diamètre du disque (13), alors que la largeur et la profondeur du logement (21) sont sensiblement supérieures à l'épaisseur et au diamètre du disque (13), dans laquelle un aimant permanent (22) est disposé sur une partie de la longueur du logement (21) dans la structure (20), et un capteur magnétique (23) est disposé sur une partie de la longueur du logement (21) d'un côté opposé à l'aimant permanent (22) et en regard de l'aimant permanent (22) dans la structure (20), dans laquelle le capteur magnétique (23) est en mesure de détecter périodiquement un changement magnétique dans son environnement proche pour fournir le premier signal électrique ou le second signal électrique au microcontrôleur (3) en fonction de la position du disque (13) dans le logement (21).

6. Pièce d'horlogerie électronique (1) selon la revendication 1 dans laquelle l'élément mobile (13) est une bille (13) magnétisée et disposée dans le logement (21) libre de mouvement, dans laquelle un premier capteur magnétique (23) est disposé sur une partie de la longueur du logement (21) dans la structure (20), et un second capteur magnétique (24) est disposé sur une partie de la longueur du logement (21) d'un côté opposé au premier capteur magnétique (23) et en regard du premier capteur magnétique (23) dans la structure (20), dans laquelle le premier capteur magnétique (23) a une orientation orthogonale au second capteur magnétique (24), et dans laquelle le premier signal électrique et le second signal électrique sont générés par au moins un des capteurs magnétiques (23, 24) pour le microcontrôleur (3) en fonction de la position et du mouvement de la bille (13) dans le logement (21).

7. Pièce d'horlogerie (1) selon la revendication 1, dans laquelle l'élément mobile est un aimant permanent (13) disposé dans le logement (21) de la structure (20), l'aimant permanent étant monté libre de rotation autour d'un axe (25) dans le logement (21) en forme de quart de cercle, et dans laquelle un capteur magnétique (23) est disposé dans la structure (20) perpendiculaire à l'axe de rotation (25), et dans laquelle le premier signal électrique et le second signal électrique sont générés pour le microcontrôleur (3) au-dessous ou au-dessus d'un seuil de détection déterminé par le capteur magnétique (23) en fonction de la position proche ou éloignée de l'aimant permanent (13) par rapport au capteur magnétique (23).

## Patentansprüche

1. Elektronische Uhr (1) mit analoger Zeitanzeige und einem Bewegungsdetektor (2), wobei die Uhr (1) ein mit mindestens einem Elektromotor (6, 7) zum Antrieb mehrerer Zeiger (26, 27, 28) zur Anzeige der Uhrzeit über ein Räderwerk (16, 17) versehenes Uhrwerk sowie einen Mikrocontroller (3) umfasst, der mit dem Bewegungsdetektor (2) verbunden ist und den mindestens einen Elektromotor (6, 7) steuert,
**dadurch gekennzeichnet, dass** der Bewegungsdetektor (2) ein bewegliches Element (13) umfasst, das in einer Aufnahme (21) einer mit dem Uhrwerk verbundenen Struktur (20) frei beweglich angeordnet ist, und
dass in Abhängigkeit von der Position und der Bewegung des beweglichen Elements (13) in der Aufnahme (21) ein erstes elektrisches Signal und ein von dem ersten elektrischen Signal verschiedenes zweites elektrisches Signal von dem Bewegungsdetektor erzeugt werden und innerhalb eines festgelegten Zeitraums durch den Mikrocontroller (3) erfassbar sind, um festzustellen, dass die Uhr (1) in Gebrauch ist, während die Uhr (1), wenn innerhalb des festgelegten Zeitraums nur ein einziges elektrisches Signal durch den Mikrocontroller (3) erfasst wird, durch Ansteuern des Stillsetzens des mindestens einen Elektromotors (6, 7) in einen Ruhemodus übergehen kann.

2. Elektronische Uhr (1) nach Anspruch 1, bei der das bewegliche Element (13) eine leitfähige Kugel (13) ist, die in der Aufnahme (21) der Struktur (20) frei beweglich angeordnet und zwischen der Aufnahme (21) und einer Leiterplatte (10) eingeschlossen ist, auf der eine mit dem Mikrocontroller (3) verbundene elektrische Anschlussfläche (11) ausgebildet ist, wobei ein metallischer Abschnitt der Struktur (20), der die Aufnahme (21) umfasst und auf Nullpotenzial liegt, nicht mit der Leiterplatte (10) in Kontakt steht und wobei zwischen einem Boden der Aufnahme (21) und der elektrischen Anschlussfläche (11) ein Zwischenraum verbleibt, derart, dass die leitfähige Kugel (13) entweder auf dem Boden der Aufnahme (21) ruhen kann, ohne die elektrische Anschlussfläche (11), die auf einem durch den Mikrocontroller (3) festgelegten Potenzial liegt, zu berühren, oder mit der genannten elektrischen Anschlussfläche (11) in Kontakt gelangen kann, ohne den Boden der Aufnahme (21) zu berühren, um die elektrische Anschlussfläche (11) auf Nullpotenzial zu legen und dadurch das erste elektrische Signal und das zweite elektrische Signal zu definieren.

3. Elektronische Uhr (1) nach Anspruch 1, bei der das bewegliche Element (13) eine Kugel (13) aus ferromagnetischem Material ist, die in der Aufnahme (21) frei beweglich angeordnet ist, wobei die Länge der Aufnahme (21) mindestens das Zweifache des Durchmessers der Kugel (13) beträgt, während die Breite und die Tiefe der Aufnahme (21) im Wesentlichen größer als der Durchmesser der Kugel (13) sind, und wobei ein Permanentmagnet (22) in der Struktur (20) über einen Teil der Länge der Aufnahme (21) angeordnet ist und ein Magnetsensor (23) in der Struktur (20) über einen Teil der Länge der Aufnahme (21) auf einer dem Permanentmagneten (22) gegenüberliegenden Seite und dem Permanentmagneten (22) zugewandt angeordnet ist, wobei der Magnetsensor (23) dazu eingerichtet ist, periodisch eine Magnetfeldänderung in seiner unmittelbaren Umgebung zu erfassen, um dem Mikrocontroller (3) in Abhängigkeit von der Position der Kugel (13) in der Aufnahme (21) das erste elektrische Signal oder das zweite elektrische Signal bereitzustellen.

4. Elektronische Uhr (1) nach Anspruch 3, bei der der Magnetsensor (23) so konfiguriert ist, dass er bei Erreichen eines festgelegten, von der Position der Kugel (13) in der Aufnahme (21) abhängigen Erfassungsschwellenwerts seinen elektrischen Zustand ändert, wobei das erste elektrische Signal durch den Magnetsensor (23) für den Mikrocontroller (3) unterhalb oder oberhalb des festgelegten Erfassungsschwellenwerts erzeugt wird und das zweite elektrische Signal erzeugt wird, wenn die Kugel von einem zwischen dem Permanentmagneten (22) und dem Magnetsensor (23) liegenden Bereich entfernt ist.

5. Elektronische Uhr (1) nach Anspruch 1, bei der das bewegliche Element (13) eine Scheibe (13) aus ferromagnetischem Material ist, die in der Aufnahme (21) frei beweglich angeordnet ist, wobei die Länge der Aufnahme (21) mindestens das Eineinhalbfache des Durchmessers der Scheibe (13) beträgt, während die Breite und die Tiefe der Aufnahme (21) im Wesentlichen größer als die Dicke beziehungsweise der Durchmesser der Scheibe (13) sind, und wobei ein Permanentmagnet (22) in der Struktur (20) über einen Teil der Länge der Aufnahme (21) angeordnet ist und ein Magnetsensor (23) in der Struktur (20) über einen Teil der Länge der Aufnahme (21) auf einer dem Permanentmagneten (22) gegenüberliegenden Seite und dem Permanentmagneten (22) zugewandt angeordnet ist, wobei der Magnetsensor (23) dazu eingerichtet ist, periodisch eine Magnetfeldänderung in seiner unmittelbaren Umgebung zu erfassen, um dem Mikrocontroller (3) in Abhängigkeit von der Position der Scheibe (13) in der Aufnahme (21) das erste elektrische Signal oder das zweite elektrische Signal bereitzustellen.

6. Elektronische Uhr (1) nach Anspruch 1, bei der das bewegliche Element (13) eine magnetisierte Kugel (13) ist, die in der Aufnahme (21) frei beweglich angeordnet ist, wobei ein erster Magnetsensor (23) in der Struktur (20) über einen Teil der Länge der Aufnahme (21) angeordnet ist und ein zweiter Magnetsensor (24) in der Struktur (20) über einen Teil der Länge der Aufnahme (21) auf einer dem ersten Magnetsensor (23) gegenüberliegenden Seite und dem ersten Magnetsensor (23) zugewandt angeordnet ist, wobei der erste Magnetsensor (23) orthogonal zu dem zweiten Magnetsensor (24) ausgerichtet ist und wobei das erste elektrische Signal und das zweite elektrische Signal durch mindestens einen der Magnetsensoren (23, 24) für den Mikrocontroller (3) in Abhängigkeit von der Position und der Bewegung der Kugel (13) in der Aufnahme (21) erzeugt werden.

7. Uhr (1) nach Anspruch 1, bei der das bewegliche Element ein Permanentmagnet (13) ist, der in der Aufnahme (21) der Struktur (20) angeordnet ist, wobei der Permanentmagnet in der viertelkreisförmigen Aufnahme (21) um eine Achse (25) frei drehbar gelagert ist und wobei ein Magnetsensor (23) in der Struktur (20) senkrecht zu der Drehachse (25) angeordnet ist, wobei das erste elektrische Signal und das zweite elektrische Signal für den Mikrocontroller (3) unterhalb beziehungsweise oberhalb eines durch den Magnetsensor (23) festgelegten Erfassungsschwellenwerts in Abhängigkeit davon erzeugt werden, ob sich der Permanentmagnet (13) in einer dem Magnetsensor (23) nahen oder von diesem entfernten Position befindet.

## Claims

1. Electronic timepiece (1) with an analogue time display and a motion detector (2), the timepiece (1) comprising a horological movement fitted with at least one electric motor (6, 7) for driving a plurality of hands (26, 27, 28) for indicating the time via a set of gear wheels (16, 17), and a microcontroller (3) connected to the motion detector (2) and controlling the at least one motor (6, 7),
**characterised in that** the motion detector (2) comprises a mobile element (13) arranged so as to move freely within a housing (21) of a structure (20) connected to the horological movement, and
**in that**, depending on the position and movement of the mobile element (13) within the housing (21), a first electrical signal and a second electrical signal, different from the first electrical signal, generated by the motion detector, can be detected by the microcontroller (3) within a defined time period to determine that the timepiece (1) is in use, whereas if only a single electrical signal is detected by the microcontroller (3) within the defined time period, the timepiece (1) can switch to a standby mode by instructing the at least one electric motor (6, 7) to stop.

2. Electronic timepiece (1) according to claim 1, in which the mobile element (13) is a conductive ball (13) arranged so as to move freely within the housing (21) of the structure (20), while being confined between the housing (21) and a circuit board (10), on which an electrical connection pad (11) connected to the microcontroller (3) is fitted, and in which a metallic portion of the structure (20), which comprises the housing (21) and is at zero potential, is not in contact with the circuit board (10), and in which there is a space remaining between a base of the housing (21) and the electrical connection pad (11) to allow the conductive ball (13) to rest on the base of the housing (21) without contacting the electrical connection pad (11), which is at a potential defined by the microcontroller (3), or to contact said electrical connection pad (11) without contacting the bottom of the housing (21) in order to impose a zero potential on the electrical connection pad (11) so as to define the first electrical signal and the second electrical signal.

3. Electronic timepiece (1) according to claim 1, in which the mobile element (13) is a ball (13) made of ferromagnetic material, arranged so as to move freely within the housing (21), the length of the housing (21) being at least twice the diameter of the ball (13), while the width and depth of the housing (21) are substantially greater than the diameter of the ball (13), and in which a permanent magnet (22) is fitted along part of the length of the housing (21) within the structure (20), and in which a magnetic sensor (23) is fitted on part of the length of the housing (21) on a side opposite the permanent magnet (22) and facing the permanent magnet (22) within the structure (20), and in which the magnetic sensor (23) is capable of periodically detecting a magnetic change in its immediate surroundings to provide the first electrical signal or the second electrical signal to the microcontroller (3) depending on the position of the ball (13) within the housing (21).

4. Electronic timepiece (1) according to claim 3, in which the magnetic sensor (23) is configured to change its electrical state from a predetermined detection threshold, depending on the position of the ball (13) within the housing (21), in which the first electrical signal is generated by the magnetic sensor (23) for the microcontroller (3) below or above a predetermined detection threshold, the second electrical signal being generated when the ball is moved away from a zone between the permanent magnet (22) and the magnetic sensor (23).

5. Electronic timepiece (1) according to claim 1, in which the mobile element (13) is a disc (13) made of ferromagnetic material, arranged so as to move freely within the housing (21), in which the length of the housing (21) is at least one and a half times the diameter of the disc (13), while the width and depth of the housing (21) are substantially greater than the thickness and the diameter of the disc (13), in which a permanent magnet (22) is fitted along part of the length of the housing (21) within the structure (20), and a magnetic sensor (23) is fitted on part of the length of the housing (21) on a side opposite the permanent magnet (22) and facing the permanent magnet (22) within the structure (20), in which the magnetic sensor (23) is capable of periodically detecting a magnetic change in its immediate surroundings to provide the first electrical signal or the second electrical signal to the microcontroller (3) depending on the position of the disc (13) within the housing (21).

6. Electronic timepiece (1) according to claim 1, in which the mobile element (13) is a magnetised ball (13) arranged so as to move freely within the housing (21), in which a first magnetic sensor (23) is fitted along part of the length of the housing (21) within the structure (20), and a second magnetic sensor (24) is fitted along part of the length of the housing (21) on the side opposite the first magnetic sensor (23) and facing the first magnetic sensor (23) within the structure (20), in which the first magnetic sensor (23) has an orientation orthogonal to the second magnetic sensor (24), and in which the first electrical signal and the second electrical signal are generated by at least one of the magnetic sensors (23, 24) for the microcontroller (3) depending on the position and on the movement of the ball (13) within the housing (21).

7. Timepiece (1) according to claim 1, in which the mobile element is a permanent magnet (13) fitted within the housing (21) of the structure (20), the permanent magnet being fitted so as to rotate freely around an axis (25) in the housing (21), which is in the form of a quarter circle, and in which a magnetic sensor (23) is fitted within the structure (20) perpendicular to the axis of rotation (25), and in which the first electrical signal and the second electrical signal are generated for the microcontroller (3) below or above a detection threshold determined by the magnetic sensor (23) depending on whether the permanent magnet (13) is close to or away from the magnetic sensor (23).
